# EUROPÄISCHE PATENTANMELDUNG

(11) **EP 3 381 336 A1**
(43) Veröffentlichungstag der Anmeldung: **03.10.2018**
(21) Anmeldenummer: 18161708.5
(22) Anmeldetag: 14.03.2018
(51) Int. Cl.: A47J 31/40, A47J 31/42, A47J 31/44

(54) **VERFAHREN UND VORRICHTUNG ZUR ANSTEUERUNG EINER HEISSGETRÄNKEBEREITUNGSVORRICHTUNG**

(30) Priorität: 27.03.2017 DE 102017106491
(71) Anmelder: Miele & Cie. KG, 33332 Gütersloh (DE)
(72) Erfinder: Pötter, Berthold, 33332 Gütersloh (DE); Liemke, Frank, 33330 Gütersloh (DE); Wolbeck, Michael, 33330 Gütersloh (DE)

(57) **Zusammenfassung**

Die Erfindung betrifft ein Verfahren (400) zur Ansteuerung einer Heißgetränkebereitungsvorrichtung (100). Das Verfahren (400) umfasst einen Schritt des Ausgebens (410) eines Anzeigemenüs (200) zur Auswahl eines von mehreren Betriebsmodi (220, 230, 240, 250) für die Heißgetränkebereitungsvorrichtung (100), wobei zumindest einer der auswählbaren Betriebsmodi (220, 230, 240, 250) einen Hochtemperaturbetriebsmodus (230) und ein weiterer der auswählbaren Betriebsmodi (220, 230, 240, 250) einen Niedertemperaturbetriebsmodus (220) repräsentiert, wobei bei dem Hochtemperaturbetriebsmodus (230) ein Betrieb der Heißgetränkebereitungsvorrichtung (100) mit einer hohen Temperatur einer Heizeinheit (150) zur Erhitzung einer Flüssigkeit zur Getränkebereitung in Zeitintervallen ohne Getränkebezug von der Heißgetränkebereitungsvorrichtung (100) vorgesehen ist und bei dem Niedertemperaturbetriebsmodus (220) ein Betrieb der Heißgetränkebereitungsvorrichtung (100) mit einer niedrigen Temperatur einer Heizeinheit (150) zur Erhitzung der Flüssigkeit in Zeitintervallen ohne Getränkebezug von der Heißgetränkebereitungsvorrichtung (100) vorgesehen ist. Ferner umfasst das Verfahren (400) einen Schritt des Einlesens (420) eines von einem Benutzer der Heißgetränkebereitungsvorrichtung (100) ausgewählten Betriebsmodus (220, 230, 240, 250) und Ansteuern der Heißgetränkebereitungsvorrichtung (100) unter Verwendung des eingelesenen Betriebsmodus (220, 230, 240, 250).

## Beschreibung

Die Erfindung betrifft ein Verfahren und eine Vorrichtung zur Ansteuerung einer Heißgetränkebereitungsvorrichtung gemäß den Hauptansprüchen.

Derzeit werden Heißgetränkebereitungsvorrichtungen meist mit einer Grundeinstellung im sogenannten "ECO Mode" ausgeliefert. Hinter dem sogenannten "ECO-Mode" bzw. ECO-Modus verbirgt sich (im eingeschalteten Zustand dieses Modus) ein Energiesparmodus, bei dem einerseits die Solltemperatur des Thermoblockes "Kaffee" (d. h., diejenige Heizeinheit, die ein Wasser für die Zubereitung von Kaffee bereitstellt) bei ca. 50°C liegt, andererseits jedoch auch die Heißgetränkebereitungsvorrichtung nach einer bestimmten Verweildauer automatisch in den "Standby"-Modus wechselt und bei einem 2-Kreis-Gerät der Thermoblock "Dampf" (d. h., diejenige Heizeinheit, die einen Dampf für die Heißgetränkebereitung bereitstellt) nicht geheizt wird. Ist der "ECO-Mode" ausgeschaltet, werden die beiden vorstehend genannten Thermoblöcke direkt im Bereich der Solltemperatur für die Zubereitung des Heißgetränkes betrieben. In diesem Modus wird dem Kunden eine zusätzliche Wartezeit für die Aufheizphase erspart. Beispielsweise kann die Heißgetränkebereitung bei einer Heißgetränkebereitungsvorrichtung etwa gemäß der folgenden Beschreibung ablaufen. Der Kunde bekommt nach Erreichen dieser Sollwerttemperatur zunächst die Betriebsbereitschaft der Heißgetränkebereitungsvorrichtung angezeigt, sodass nun ein Getränk gewählt werden kann. Am Beispiel der Bereitung eines Cappuccino wird diese Vorgehensweise der Heißgetränkebereitungsvorrichtung nun näher erläutert. Cappuccino setzt sich aus Milchschaum und Espresso zusammen. Die Solltemperaturen für den Thermoblock bzw. die Heizeinheit zur Erzeugung von Dampf beträgt im eingeschalteten "ECO Modus" etwa Raumtemperatur (d. h. diese Heizeinheit ist ausgeschaltet) bzw. beträgt 150°C für den Fall, dass der "ECO-Modus" ausgeschaltet ist. Die Solltemperaturen im Thermoblock "Wasser", d. h., in der Heizeinheit, die zur Erhitzung von Wasser für die Kaffee- bzw. Espresso-Bereitung vorgesehen ist, beträgt bei eingeschaltetem "ECO-Modus" 50°C bzw. 96°C bei ausgeschaltetem "ECO-Modus".

Wird nun von einem Benutzer der Heißgetränkebereitungsvorrichtung die Zubereitung eines Cappuccinos angewählt, so erscheint in einer Displayanzeige der Text "Aufheizphase" und die Heizeinheit für die Erhitzung von Wasser zur Zubereitung des Kaffeeanteils des Cappuccino wird mit einer Wartezeit für den Benutzer der Heißgetränkebereitungsvorrichtung aufgeheizt. Diese Wartezeit ist äußerst störend für den Kunden bzw. Benutzer, jedoch verändert kaum ein Kunde bzw. Benutzer der Heißgetränkebereitungsvorrichtung die Einstellung vom eingeschalteten "ECO-Mode" auf einen ausgeschalteten "ECO-Mode". Dies liegt daran, dass sich viele Kunden bzw. Benutzer der Heißgetränkebereitungsvorrichtung nicht mit der Gebrauchsanweisung der Heißgetränkebereitungsvorrichtung auseinandersetzen. Die Bedürfnisse des Kunden werden somit nicht im vollen Maße berücksichtigt. Die Grundeinstellung des Gerätes (ECO-Modus) gehen zu Lasten des Kunden bzw. Benutzers. Die Funktionalität des Gerätes wird nicht ausgeschöpft. Die Energeieinsparung/Jahr (in kWh oder Euro) stehen nicht im Verhältnis zum eingeschränkten Gebrauchsnutzen.

Der Erfindung stellt sich die Aufgabe, ein verbessertes Verfahren und eine verbessertes Vorrichtung zur Ansteuerung einer Heißgetränkebereitungsvorrichtung zu schaffen.

Erfindungsgemäß wird diese Aufgabe durch ein Verfahren sowie durch eine Vorrichtung mit den Schritten bzw. Merkmalen der jeweils unabhängigen Ansprüche gelöst. Vorteilhafte Ausgestaltungen und Weiterbildungen der Erfindung ergeben sich aus den jeweils nachfolgenden abhängigen Ansprüchen.

Die mit der Erfindung erreichbaren Vorteile bestehen neben einer Verbesserung des Bedienungskomforts der Heißgetränkebereitungsvorrichtung auch in einer möglichen Verkürzung der Wartezeit für einen Benutzer der Heißgetränkebereitungsvorrichtung, wenn ein vorbestimmter Betriebsmodus eingestellt wurde.

Der hier vorgestellte Ansatz schafft ein Verfahren zur Ansteuerung einer Heißgetränkebereitungsvorrichtung, wobei das Verfahren die folgenden Schritte aufweist:
- Ausgeben eines Anzeigemenüs zur Auswahl eines von mehreren Betriebsmodi für die Heißgetränkebereitungsvorrichtung, wobei zumindest einer der auswählbaren Betriebsmodi einen Hochtemperaturbetriebsmodus und ein weitere der auswählbaren Betriebsmodi einen Niedertemperaturbetriebsmodus repräsentiert, wobei bei dem Hochtemperaturbetriebsmodus ein Betrieb der Heißgetränkebereitungsvorrichtung mit einer hohen Temperatur einer Heizeinheit zur Erhitzung einer Flüssigkeit zur Getränkebereitung in Zeitintervallen ohne Getränkebezug von der Heißgetränkebereitungsvorrichtung vorgesehen ist und bei dem Niedertemperaturbetriebsmodus ein Betrieb der Heißgetränkebereitungsvorrichtung mit einer niedrigen Temperatur eine Heizeinheit zur Erhitzung der Flüssigkeit in Zeitintervallen ohne Getränkebezug von der Heißgetränkebereitungsvorrichtung vorgesehen ist; und
- Einlesen eines von einem Benutzer der Heißgetränkebereitungsvorrichtung ausgewählten Betriebsmodus und Ansteuern der Heißgetränkebereitungsvorrichtung unter Verwendung des eingelesenen Betriebsmodus.

Unter einem Anzeigemenü kann eine Liste von mehreren Betriebsmodi verstanden werden, welche zur Auswahl durch einen Benutzer der Heißgetränkebereitungsvorrichtung stehen. Unter einem Hochtemperaturbetriebsmodus kann beispielsweise ein Betriebsmodus verstanden werden, bei dem eine Heizeinheit bereits zu einem Zeitpunkt vor der Bereitung des Heißgetränks innerhalb eines Toleranzbereichs (beispielsweise von 10 bis 20 Prozent) auf eine Betriebstemperatur aufgeheizt wird, die zur Erhitzung der Flüssigkeit zur Getränkezubereitung erforderlich ist. Unter einem Niedertemperaturbetriebsmodus kann beispielsweise ein Betriebsmodus verstanden werden, bei dem die Heizeinheit zu dem Zeitpunkt vor der Bereitung des Heißgetränks auf eine niedrigere Temperatur (vorzugsweise außerhalb des vorstehend genannten Toleranzbereichs der Betriebstemperatur) aufgeheizt wird. Insofern kann beispielsweise der Niedertemperaturbetriebsmodus dem vorstehend genannten "ECO-Modus" im eingeschalteten Zustand und der Hochtemperaturbetriebsmodus dem "ECO-Modus" ausgeschaltete Zustand entsprechen. Unter einem Ansteuern der Heißgetränkebereitungsvorrichtung unter Verwendung des eingelesenen Betriebsmodus kann beispielsweise die Ansteuerung der Heizeinheit zur Erreichung der hohen Betriebstemperatur zu Erhitzung der Flüssigkeit zur Getränkezubereitung im Falle des ausgewählten bzw. eingelesenen Hochtemperaturbetriebsmodus als Betriebsmodus oder die Ansteuerung der Heizeinheit zur Erreichung der niedrigeren Stand-by-Temperatur als Betriebstemperatur im Falle des ausgewählten bzw. eingelesenen Niedertemperaturbetriebsmodus als Betriebsmodus verstanden werden.

Der hier vorgestellte Ansatz bietet den Vorteil, durch die Auswahlmöglichkeit für den Benutzer bei Inbetriebnahme der Heißgetränkebereitungsvorrichtung bereits schon unter Komfortaspekten einen vorteilhaften Betriebsmodus der Heißgetränkebereitungsvorrichtung einstellen zu können. Hierbei entfällt ein intensives Studium der Betriebsanleitung der Heißgetränkebereitungsvorrichtung, wobei dennoch die Möglichkeit besteht, bei einer hohen Umweltschutzneigung des Benutzers der Heißgetränkebereitungsvorrichtung mit der Auswahl des Niedertemperaturbetriebsmodus den ursprünglich voreingestellten ECO-Modus auswählen zu können, wobei diese Voreinstellung jedoch nicht durch die Werksvoreinstellung vorgegeben ist und somit der Benutzer bevormundet würde.

Von Vorteil ist ferner eine Ausführungsform des hier vorgeschlagenen Ansatzes, bei der der Schritt des Ausgebens und der Schritt des Einlesens bei einer Erstinbetriebnahme der Heißgetränkebereitungsvorrichtung ausgeführt werden, wobei der im Schritt des Einlesens eingelesene Betriebsmodus für eine nachfolgende Inbetriebnahme der Heißgetränkebereitungsvorrichtung abgespeichert wird, insbesondere wobei für eine nachfolgende Inbetriebnahme die Schritte des Ausgebens und des Einlesens unterdrückt werden. Unter einer Erstinbetriebnahme kann eine Inbetriebnahme einer neuwertigen Heißgetränkebereitungsvorrichtung verstanden werden. Eine solche Ausführungsform des hier vorgeschlagenen Ansatzes bietet den Vorteil, dass bei einer Erstinbetriebnahme der Heißgetränkebereitungsvorrichtung, d.h. der Inbetriebnahme der Heißgetränkebereitungsvorrichtung im neuwertigen Zustand, bereits die Wünsche des Benutzers dieser Heißgetränkebereitungsvorrichtung direkt abgefragt bzw. für die weitere Benutzung der Heißgetränkebereitungsvorrichtung eingestellt werden können. Ein intensives Studium der Betriebsanleitung der Heißgetränkebereitungsvorrichtung ist daher nicht mehr erforderlich.

Gemäß einer weiteren Ausführungsform des hier vorgeschlagenen Ansatzes kann im Schritt des Ausgebens ferner zumindest einer der auswählbaren Betriebsmodi einen Betriebsmodus unter Verwendung von Milch zur Zubereitung des Heißgetränks repräsentieren, insbesondere wobei im Schritt des Einlesens ein Ansteuern einer Pumpe zur Aufnahme von Milch in eine Milchbehandlungseinheit ausgeführt wird. Eine solche Ausführungsform des hier vorgeschlagenen Ansatzes bietet den Vorteil, der Heißgetränkebereitungsvorrichtung bereits frühzeitig eine Information über die zu erwartende häufige Verwendung von Milch als besonders empfindlichem bzw. verderblichem Lebensmittel geben zu können, sodass entsprechende Verarbeitungsparameter in einer entsprechenden Verarbeitungseinheit für Milch voreingestellt (beispielsweise eine Heizeinheit für die Erhitzung von Milch auf eine hohe benötigte Betriebstemperatur zu bringen) werden können, um den Benutzerkomfort möglichst hoch zu halten und/oder Wartezeiten für den Benutzer der Heißgetränkebereitungsvorrichtung kurz zu halten.

Denkbar ist ferner eine Ausführungsform des hier vorgeschlagenen Ansatzes, bei der im Schritt des Ausgebens ferner zumindest einer der auswählbaren Betriebsmodi einen Betriebsmodus repräsentiert, in welchem eine Ausgabe von Anweisungen zur Wartung der Heißgetränkebereitungsvorrichtung an einen Benutzer der Heißgetränkebereitungsvorrichtung unterdrückt wird. Unter einer Anweisung zur Wartung kann beispielsweise eine Information oder Aufforderung verstanden werden, die Heißgetränkebereitungsvorrichtung zu entkalken oder eine Brüheinheit der Heißgetränkebereitungsvorrichtung zu entfetten. Eine solche Ausführungsform des hier vorgeschlagenen Ansatzes bietet den Vorteil eines erhöhten Benutzerkomforts, da ein Benutzer nicht durch für ihn eventuell unverständliche Anweisungen irritiert wird, sodass die Gefahr einer möglichen Fehlbedienung der Heißgetränkebereitungsvorrichtung ebenfalls minimiert werden kann. Gegebenenfalls können Wartungshandlungen allein durch eingewiesene Personen oder Fachpersonal ausgeführt werden.

Besonders vorteilhaft ist eine Ausführungsform des hier vorgeschlagenen Ansatzes, bei der im Schritt des Einlesens ein Ansteuern der Heizeinheit zur Vorheizung der Heizeinheit erfolgt, wenn der Hochtemperaturbetriebsmodus ausgewählt wurde und vom Benutzer kein Heißgetränkebereitungssignal eingelesen wurde, welches einen aktuellen Wunsch der Zubereitung eines Heißgetränkes repräsentiert. Eine solche Ausführungsform bietet den Vorteil, dass der Benutzer der Heißgetränkebereitungsvorrichtung eine sehr kurze oder gar keine Wartezeit erfährt, sobald er seinen Wunsch zum Bezug eines Heißgetränks der Heißgetränkebereitungsvorrichtung eingegeben hat.

Für den Fall, dass der Benutzer der Heißgetränkebereitungsvorrichtung seine Einstellung in Bezug auf den Bedienungskomfort und/oder Umweltschutzaspekte ändert, kann vorteilhafterweise gemäß einer weiteren Ausführungsform des hier vorgeschlagenen Ansatzes im Schritt des Einlesens ein Rücksetzsignal eingelesen werden, welches einen vorangegangenen ausgewählten Betriebsmodus als nicht mehr aktuell klassiert oder löscht, wobei ferner eine wiederholte Ausführung der Schritte des Anzeigens und Einlesens angesteuert wird.

Besonders aromatisch schmecken der Heißgetränke können gemäß einer weiteren Ausführungsform des hier vorgeschlagenen Ansatzes dadurch erreicht werden, dass im Schritt des Einlesens ein Ansteuern der Heißgetränkebereitungsvorrichtung derart erfolgt, dass eine Pumpgeschwindigkeit für eine Flüssigkeit gegenüber einer Pumpgeschwindigkeit der Flüssigkeit bei einem anderen Betriebsmodus gedrosselt ist.

Gemäß einer weiteren Ausführungsform des hier vorgeschlagenen Ansatzes kann auch im Schritt des Einlesens ein Ansteuern der Heißgetränkebereitungsvorrichtung derart erfolgen, dass vor einer Zubereitung des Heißgetränks eine Einschaltspülung der Heißgetränkebereitungsvorrichtung ausgeschaltet und/oder unterdrückt wird. Eine solche Ausführungsform des hier vorgeschlagenen Ansatzes bietet den Vorteil, dass einerseits ein Flüssigkeitsvorratsbehälter nicht so schnell entleert wird, die Abtropfschale nicht zusätzlich mit Schmutzwasser befüllt wird und dadurch häufiges Entleeren entfällt und andererseits die Wartezeit für einen Erstbezug eines Heißgetränks nach Einschalten oder Inbetriebnahme der Heißgetränkebereitungsvorrichtung sehr kurz ausfallen wird.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrundeliegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Die Erfindung betrifft ferner eine Heißgetränkebereitungsvorrichtung, umfassend ein Fluidsystem, in dem ein Wassertank oder Wasseranschluss, eine Pumpe, eine Heizeinheit eine Brüheinheit und ein Ventilsystem zur selektiven Aktivierung der Strömungswege innerhalb des Fluidsystems angeordnet ist, welches in einen Auslassstutzen mit zumindest einer Düse mündet, um das zubereitete Getränk, heißes Wasser oder Dampf auszugeben. Die Heißgetränkebereitungsvorrichtung umfasst ferner eine Vorrichtung wie oben genannt, welche mit dem Computer-Programmprodukt wie vorstehend bestückt ist, um zumindest die Pumpe und die Heizeinheit zur Durchführung eines Verfahrens wie oben genannt anzusteuern. Die Vorrichtung ist in dieser Ausführung die Steuervorrichtung der Getränkezubereitungsvorrichtung und aktiviert oder deaktiviert die aktiven Komponenten, wie Pumpe, Heizeinheit, die Brüheinheit und das Ventilsystem zur Zubereitung des vom Benutzer ausgewählten Getränks. Bevorzugt ist der Brüheinheit ein Mahlwerk mit einem vorgeschalteten Vorratsbehälter für Bohnen oder anderem Granulat vorgeschaltet, um bedarfsweise die Brühsubstanz zu zerkleinern und in die Brüheinheit zu dosieren.

Auch wenn der beschriebene Ansatz anhand eines Haushaltgeräts beschrieben wird, kann die hier beschriebe Vorrichtung bzw. das hier beschriebene Verfahren entsprechend im Zusammenhang mit einem gewerblichen oder professionellen Gerät, beispielsweise einem Gastronomiegerät, eingesetzt werden.

Ein Ausführungsbeispiel der Erfindung ist in den Zeichnungen rein schematisch dargestellt und wird nachfolgend näher beschrieben. Es zeigen
- Fig. 1: eine perspektivische Ansicht einer Heißgetränkebereitungsvorrichtung zur Verwendung in einem Ausführungsbeispiel der vorliegenden Erfindung;
- Fig. 2:: einen vereinfachten Fluidplan des Strömungsleitungssystems;
- Fig. 3:: Darstellung eines solchen Auswahlmenüs zur Verwendung in einem Ausführungsbeispiel der vorliegenden Erfindung;
- Fig. 4:: ein schematisches Ablaufdiagramm zur Erstinbetriebnahme der Heißgetränkebereitungsvorrichtung zur Verwendung mit einem Ausführungsbeispiel der vorliegenden Erfindung und
- Fig. 5:: ein Ablaufdiagramm eines Verfahrens zur Ansteuerung einer Heißgetränkebereitungsvorrichtung gemäß einem Ausführungsbeispiel der vorliegenden Erfindung.

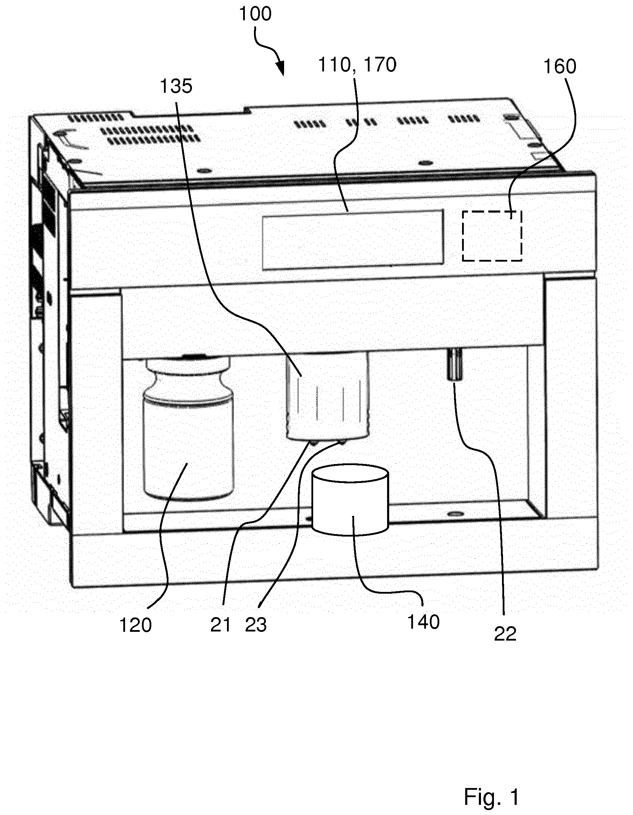

Figur 1 zeigt eine perspektivische Ansicht einer Heißgetränkebereitungsvorrichtung 100. Die Heißgetränkebereitungsvorrichtung 100 umfasst ein Display 110, welches auch als Anzeigeeinheit bezeichnet werden kann, wobei dieses Display 110 zum Beispiel als Touchscreen zur Bereitstellung einer Bedienhandhabe ausgebildet ist, über welches ein Benutzer der Heißgetränkebereitungsvorrichtung 100 die Art und Menge des gewünschten Heißgetränks, beispielsweise Kaffee, Cappuccino, Latte Macciato, Espresso, Tee (d. h. speziell heißes Wasser) oder dergleichen auswählen und eingeben kann. Ansprechend auf den von dem Benutzer über die Anzeigeeinheit 110 eingegebenen Bezugswunsch des Heißgetränks, je nach Zusammensetzung des ausgewählten Heißgetränks, kann beispielsweise Milch aus einem Milchvorratsbehälter 120 mittels einer Venturipumpe 125 entnommen und mittels des Leitungssystems der Auslaufdüse 135 zugeführt werden. Die Venturipumpe 125 kann beispielsweise auch ausgebildet sein, um Milchschaum aus der ihr zugefügten Milch M und dem durch das Venturuirohr durchgeleiteten Dampf zu bilden und die heiße Milch oder den Milchschaum über einen Auslassstutzen oder Düse 135 in ein Gefäß 140, beispielsweise eine Tasse, auszugeben. Die Venturipumpe 125 und die Leitungsabschnitte einschließlich der Auslaufdüse 125 können hierbei zusammenfassend mit als Milchbehandlungseinheit bezeichnet werden. Als Venturipumpe 125 wird ein sich verengender Leitungsabschnitt (Venturirohr) bezeichnet, durch den Dampf geleitet wird. Im Bereich der Engstelle mündet die aus dem Milchbehälter 120 stammende Ansaugleitung, durch die aufgrund des Unterdrucks an der Engstelle Milch aus dem Milchbehälter 120 in den Leitungsabschnitt der Venturipumpe 125 gefördert wird und dann gemeinsam mit dem Dampf zur Auslassdüse 23 gelangt.

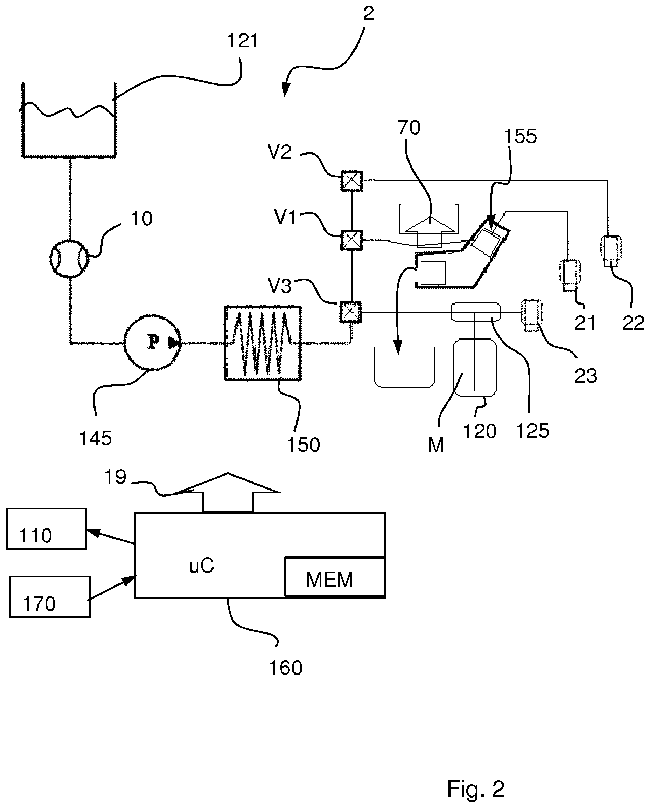

Gemäß Fig. 2 ist das Strömungsleitungssystem oder Fluidsystem 2 der Heißgetränkebereitungsvorrichtung 100 als Fluidplan skizziert. Die Heißgetränkebereitungsvorrichtung 100 umfasst ein Fluidsystem 2, in dem ein Wassertank 121 oder Wasseranschluss, eine Pumpe 145, eine Heizeinheit 150 eine Brüheinheit 155 und ein Ventilsystem V1, V2, V3 zur selektiven Aktivierung der Strömungswege innerhalb des Fluidsystems 2 angeordnet ist. Das Fluidsystem 2 mündet in einen der Auslassstutzen 135, um durch die Düsen 21, 22, 23 das zubereitete Getränk, heißes Wasser oder Dampf auszugeben.

Weiterhin kann nun beispielsweise mittels einer Pumpe 145 aus einem Wasservorratsbehälter 121 Wasser entnommen und einer Heizeinheit 150 für Wasser zugeführt werden. Das durch die Heizeinheit 150 erhitzte Wasser kann nachfolgend einer Brüheinheit 155 geführt werden, in welcher beispielsweise bereits gemahlener Kaffee als Kaffeepulver aus einer Mahleinheit 70 vorrätig gehalten wird. In der Brüheinheit 155 wird dann unter Verwendung des durch die Heizeinheit 150 erhitzten Wassers beispielsweise Kaffee gebrüht und ebenfalls über den Auslassstutzen 135 bzw. zumindest einer der Düsen 21, 22, 23 in das Gefäß 140 eingeleitet, sodass der Benutzer der Heißgetränkebereitungsvorrichtung 100 das gewünschte Heißgetränk erhält.

Um nun unnötige Wartezeiten beim Bezug des Heißgetränks durch den Benutzer der Heißgetränkebereitungsvorrichtung 100 zu vermeiden, werden oftmals die Heizeinheit 150 für für Wasser vorgeheizt und in einem solchen vorgeheiztem Zustand über längere Zeit gehalten. Hierdurch kann die Erhitzung der Milch/des Wassers aufgrund der vorgeheizten Heizeinheit 150 bei dem Bezugswunsch des Heißgetränks durch den Benutzer schnell erfolgen, weil die Wartezeit zum Aufheizen entfällt oder stark verkürzt wird. Um jedoch einen hohen Energieaufwand beim Betrieb der Heißgetränkebereitungsvorrichtung 100 zu vermeiden, wird die Heizeinheit 150 für Wasser meist nicht auf diejenigen Temperaturen vorgeheizt und auf diesen Temperaturen gehalten, die nachfolgend im tatsächlichen Erhitzungsbetrieb für das Wasser oder zur Dampferzeugung erforderlich sind. Vielmehr wird in einer Werkseinstellung der vorstehend genannte ECO-Modus als ein Energiesparmodus bei Erstinbetriebnahme der Heißgetränkebereitungsvorrichtung 100 voreingestellt bzw. vorausgewählt. Wie vorstehend bereits ausgeführt wurde, erfordert dieser Betriebsmodus der Heißgetränkebereitungsvorrichtung 100 jedoch längere Wartezeiten, da die Heizeinheit 150 für Wasser zunächst auf die erforderliche Betriebstemperatur zur tatsächlichen Erhitzung der des Wassers oder zur Dampferzeugung gebracht werden müssen, bevor die Ausgabe des Heißgetränks durch die Heißgetränkebereitungsvorrichtung 100 gestartet werden kann. Diese Wartezeit wird jedoch von einigen Benutzern der Heißgetränkebereitungsvorrichtung 100 als Komforteinbuße betrachtet, zumal die erforderlichen Energieaufwendungen zum Erhalt der für den Erhitzungsbetrieb für Milch M bzw. Wasser erforderlichen Temperaturen in der Heizeinheit 150 (insbesondere bei spezieller Isolierung dieser als Einheiten) oftmals nur geringfügig ins Gewicht fallen.

Aus diesem Grund wird vorliegend ein Ansatz vorgeschlagen, bei der Erstinbetriebnahme der Heißgetränkebereitungsvorrichtung 100 dem Benutzer die Auswahl von mehreren zur Verfügung stehenden Betriebsmodi der Heißgetränkebereitungsvorrichtung 100 zur Auswahl zu stellen. Dies kann beispielsweise ebenfalls über die Anzeigeeinheit 110 bzw. das Display erfolgen, sodass der Benutzer ein Auswahlmenü zur Auswahl von einem aus mehreren Betriebsmodi der Heißgetränkebereitungsvorrichtung 100 angezeigt bekommt.

Um die Ansteuerung der Heißgetränkebereitungsvorrichtung 100 tatsächlich vornehmen oder ausführen zu können, ist eine Vorrichtung 160 zur Ansteuerung einer Heißgetränkebereitungsvorrichtung 100 vorgesehen. Die Vorrichtung 160, die als Steuerungsvorrichtung 160 fungiert, ist ferner zum Ausgeben des nachfolgend noch näher beschriebenen Anzeigemenüs 200 zur Auswahl eines von mehreren Betriebsmodi für die Heißgetränkebereitungsvorrichtung 100 eine als Touchscreen ausgeführte Anzeigeeinheit 110 vorgesehen oder programmiert, wobei zumindest einer der auswählbaren Betriebsmodi einen Hochtemperaturbetriebsmodus und ein weitere der auswählbaren Betriebsmodi einen Niedertemperaturbetriebsmodus repräsentiert, wobei bei dem Hochtemperaturbetriebsmodus ein Betrieb der Heißgetränkebereitungsvorrichtung 100 mit einer hohen Temperatur die Heizeinheit 150 zur Erhitzung einer Flüssigkeit (hier beispielsweise Wasser) zur Getränkebereitung in Zeitintervallen ohne Getränkebezug von der Heißgetränkebereitungsvorrichtung 100 vorgesehen ist und bei dem Niedertemperaturbetriebsmodus ein Betrieb der Heißgetränkebereitungsvorrichtung 100 mit einer niedrigen Temperatur eine Heizeinheit 150 zur Erhitzung der Flüssigkeit (hier beispielsweise Wasser) in Zeitintervallen ohne Getränkebezug von der Heißgetränkebereitungsvorrichtung 100 vorgesehen ist. Weiterhin steht die Steuervorrichtung 160 mit der Eingabeeinheit 170 in Wirkverbindung (Daten - oder Signalverbindung) zum Einlesen eines von einem Benutzer der Heißgetränkebereitungsvorrichtung 100 ausgewählten Betriebsmodus, wie einer Touchscreen Bedieneinheit 170. Ferner ist die Steuervorrichtung 160 zum Ansteuern der Heißgetränkebereitungsvorrichtung 100 bzw. der Komponenten der Heißgetränkebereitungsvorrichtung 100 wie den in der Fig. 2 dargestellten Einheiten 145, 150, V1, V2, V3, 155 unter Verwendung des eingelesenen Betriebsmodus eingerichtet, wie dies mit dem Pfeil 19 als Ausgabeleitungen für die Aktoren skizziert ist.

Fig. 2 zeigt einen vereinfachten Schaltplan eines Strömungsleitungssystems 2 innerhalb eines Getränkeautomaten bzw. Heißgetränkebereitungsvorrichtung 100. Von einer Wasserquelle 121, in diesem Beispiel ein Wassertank, wird das Strömungsleitungssystem 2 mit frischem Wasser versorgt. Das Strömungsleitungssystem 2 umfasst dabei Leitungsabschnitte und Komponenten, die zur Zubereitung von Getränken dienen. Zur Erzeugung der Strömung innerhalb des Strömungsleitungssystems 2 sowie des erforderlichen Druckaufbaus dient eine Pumpe 145. Darüber hinaus umfasst der zur Zubereitung der Getränke genutzte Teil des Strömungsleitungssystems 2 eine Heizeinrichtung 150 zur Erwärmung des Wassers 2a sowie mehrere Entnahmeeinrichtungen 21, 22, 23, sowie Leitungsabschnitte zur Verbindung der einzelnen Komponenten miteinander, wobei die Dampfdüse 22 zur Ausgabe von Dampf und zur Ausgabe von heißem Wasser und/oder die Kaffeedüse 21 zur Ausgabe des zubereiteten Kaffeegetränkes oder Teegetränkes, je nachdem, welches Pulver oder Substrat der Brühkammer 155 zugeführt wurde, vorgesehen ist. Ferner ist eine Milchdüse 23 vorgesehen, die mit der Venturipumpe 125 verbunden ist und zur Ausgabe von Milch oder Milchschaum vorgesehen ist. Zur selektiven Ansteuerung der Entnahmeeinrichtungen 21, 22, 23 dienen die Ventile V1, V2 und V3, die den Entnahmeeinrichtungen 21, 22, 23 bzw. der Brühkammer 155 oder der Venturipumpe 125 in Strömungsrichtung betrachtet vorgeschaltet sind. Darüber hinaus kann das Strömungsleitungssystem 2 ein Messgerät zur Volumenstrommessung, das als Flowmeter 10 bezeichnet wird, aufweisen, das hilfreich ist, um eine genaue Menge frischen Wassers zu bestimmen, die für die Zubereitung eines Getränkes erforderlich ist. Darüber hinaus lässt sich mit einer derartigen Messeinrichtung 10 auch die Anzahl der hergestellten Getränke bestimmen.

Die Steuereinrichtung 160 mit einem Mikrocontroller uC und einer Speichereinrichtung MEM mit einem darin gespeicherten und für die hier genannten Anwendung programmierten Computerprogrammprodukt dient zur Durchführung einer Getränkezubereitung, wobei hierbei die Aktivierung der Heizeinrichtung 150, der Ventile V1, V2 und V3 sowie der Pumpe 145, der Brühkammer 155 und bedarfsweise weiteren Komponenten, wie einem Mahlwerk 70 durch entsprechende Signalverbindungen 19 erfolgt. In Fig. 2 ist die Signalverbindung 19 zum Motor der Pumpe 145 und zu den anderen, zu steuernden Komponenten grob skizziert, wobei die Ansteuerung der Pumpe 145 in einer bevorzugten derart erfolgt, dass verschiedene Förderleistungen eingestellt werden können.

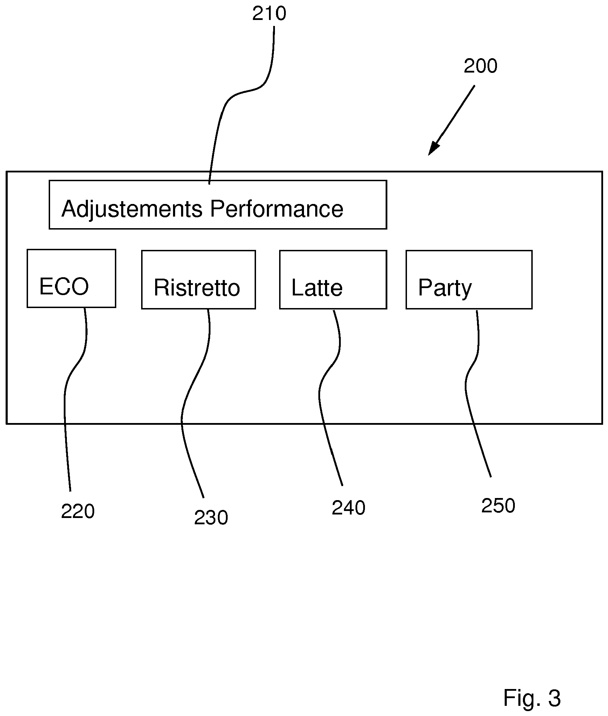

Figur 3 zeigt die als Touchscreen ausgebildete Bedien- 170 und Anzeigeeinheit 110 mit einer Darstellung eines solchen Auswahlmenüs 200, wie es beispielsweise auf der Anzeigeeinheit 110 ausgegeben werden kann. Das Auswahlmenü 200 kann hierbei eine Information in einem Bereich 210 anzeigen, die darauf hinweist, dass in diesem Auswahlmenü nun eine Einstellung bzw. Auswahl eines speziellen Betriebsmodus der Heißgetränkebereitungsvorrichtung 100 vorzunehmen ist. Zur Auswahl stehen beispielsweise ein Niedertemperaturbetriebsmodus 220, der beispielsweise dem eingeschalteten ECO-Modus entspricht, der herkömmlicherweise als Werkseinstellung der Heißgetränkebereitungsvorrichtung 100 bereits voreingestellt ist. Alternativ kann jedoch auch ein Hochtemperaturbetriebsmodus 230 ausgewählt werden, bei dem beispielsweise die Temperatur in der Heizeinheit 150 (Fig. 2) bereits innerhalb eines Toleranzbereichs von beispielsweise 10 bis 20 Prozent um die tatsächliche Arbeitstemperatur, d.h., die Erhitzungstemperatur für Milch bzw. Wasser, dauerhaft gehalten wird. Dies bedeutet, dass im Hochtemperaturbetriebsmodus 230 auch die Heizeinheit 150 in einem Zeitintervall vor dem Bezug des Heißgetränks auf die hohe Betriebstemperatur aufgeheizt und in einer solchen hohen Betriebstemperatur vorgehalten wird bzw. in dieser Vorgabetemperatur dauerhaft verbleibt. In einem solchen Hochtemperaturbetriebsmodus 230 sind folglich auch die Wartezeiten für den Bezug des Heißgetränks von der Heißgetränkebereitungsvorrichtung 100 deutlich reduziert, da das Aufheizen der entsprechend zu verwendenden Heizeinheit 150 entfallen kann oder deutlich verkürzt ist.

Denkbar ist ferner noch die Auswahl eines im Auswahlmenü 200 dargestellten Milchbetriebsmodus 240, in welcher insbesondere Komponenten der Milchbehandlungseinheit benutzt werden. In diesem Modus wird das Strömungsleitungssystem 2 häufiger mit kaltem und warmem Wasser durchgespült, sodass neben der häufigen Spülung auch die Heizeinheit 150 auf eine vorbestimmte, gegenüber Raumtemperatur erhöhte Temperatur gehalten wird. Ferner kann aufgrund der bereits vorgeheizten Heizeinheit die Dampferzeugung zur Milchförderung ohne lange Aufheizzeit unmittelbar nach der Anwahl des Getränks gestartet werden, sodass eine schnelle Zubereitung des Milchgetränks bereitgestellt wird.

Schließlich kann in dem Anzeigemenü 200 noch ein Partybetriebsmodus 250 zur Auswahl angezeigt oder ausgegeben werden, in welchem eine kurze Bezugszeit des Heißgetränks auf Feiern oder Partys im Vordergrund steht und beispielsweise zeitlich länger andauernde Wartungsarbeiten wie beispielsweise ein Reinigen von Komponenten der Brüheinheit 40 oder ein Entkalken der Heißgetränkebereitungsvorrichtung 100 vermieden werden sollen.

Zusammenfassend ist somit auszuführen, dass durch die Anzeige des Auswahlmenüs 200, speziell bei der Erstinbetriebnahme der Heißgetränkebereitungsvorrichtung 100 eine den Komfortansprüchen des Nutzers der Heißgetränkebereitungsvorrichtung 100 bedarfsgerechte Einstellung erfolgen kann. Beispielhaft sind hierbei im Auswahlmenü 204 Betriebsmodi dargestellt, die unter dem Begriff "Performance Mode" sich wie folgt zusammenfassen lassen:
1. ECO Mode (Grundeinstellung) als Niedertemperaturbetriebsmodus 220;
2. Ristretto/Espresso-Mode als Betriebsmodus, der für Kaffeegenießer ausgelegt und optimiert ist. Ein wesentlicher Aspekt ist hierbei die genaue Einhaltung der Pumpenleistung der Wasserpumpe 145, um die optimale Extraktionszeit für einen schwarzen Kaffee oder einen Espresso mit geringer Wassermenge zu erreichen. Es wird hierbei sichergestellt, dass die vorgegebene Brühzeit, die im Bereich von etwa 20 bis 30 Sekunden liegt, auch bei geringerer Wassermenge eingehalten wird.
3.Cappu/Latte Macciato Mode als Milchbetriebsmodus 240, der für Kunden / Benutzer die hauptsächlich diese Milch-Mix-Getränke beziehen optimiert ist; und
4. Party Mode als Partybetriebsmodus 250, bei dem kurze Bezugszeiten des Heißgetränks im Vordergrund stehen und beispielsweise Hinweistexte zur Anforderung von Wartungsarbeiten an der Heißgetränkebereitungsvorrichtung 100 wie "Brüheinheit reinigen", "Gerät entkalken", etc. während der Einschaltdauer/Nutzung unterdrückt werden.

Mit der bedarfsgerechten Auswahl eines Unterprogrammes bzw. Betriebsmodus der Heißgetränkebereitungsvorrichtung 100 lässt sich dann vorteilhaft eine hohe Kundenzufriedenheit erreichen. Mit der Anwahl eines speziellen, kundenorientierten Programmes bzw. Betriebsmodus der Heißgetränkebereitungsvorrichtung 100 entscheidet sich der Kunde / Benutzer bewusst für eine Einstellung, die auf den Gebrauchsnutzen des Gerätes bzw. der Heißgetränkebereitungsvorrichtung 100 zugeschnitten ist.

Neben der Auswahl eines bestimmten Betriebsmodus der Heißgetränkebereitungsvorrichtung 100 zur Einstellung von Temperaturen von einzelnen Komponenten kann auch noch ein (oder mehrere) Parameter, die Teil von entsprechenden Betriebsmodi sind, speziell eingestellt werden. Hierbei zählen beispielsweise Einstellungsmöglichkeiten für die folgenden Parameter:
a) Anwahl verschiedener Sollwerttemperaturen für den Thermoblock bzw. Thermoblöcke / Heizeinheiten 150 (bei einem 2-Kreis-System mit einem Wasserkreis unr einem zusätzlichen Thermoblock zur Dampferzeugung);
b) Drosseln der Pumpengeschwindigkeit in entsprechenden Pumpen bzw. Pumpeinheiten wie der Wasserpumpe 145, um die optimale Extraktionszeit zu erreichen;
c) Einschaltspülung: An- oder Abwahl der Einschaltspülung;
d) Vorwärmen der Brüheinheit ,mittels vorgewärmtem Wasser (gegebenenfalls kann hier eine separate Unterauswahl möglich sein); und
e) Unterdrücken von bestimmten Hinweistexten für die Pflege des Gerätes.

Die Anzeige des Auswahlmenüs 200 kann hierbei speziell bei der Erstinbetriebnahme der Heißgetränkebereitungsvorrichtung 100, also der Inbetriebnahme einer neuwertigen Heißgetränkebereitungsvorrichtung 100, erfolgen. Nachdem bei einer solchen Erstinbetriebnahme noch weitere Parameter zum Betrieb der Heißgetränkebereitungsvorrichtung 100 einzugeben sind, wird nachfolgend ein Beispiel zur Anordnung der Anzeige des Auswahlmenüs 200 im Rahmen des Ablaufs der Erstinbetriebnahme der Heißgetränkebereitungsvorrichtung 100 dargestellt.

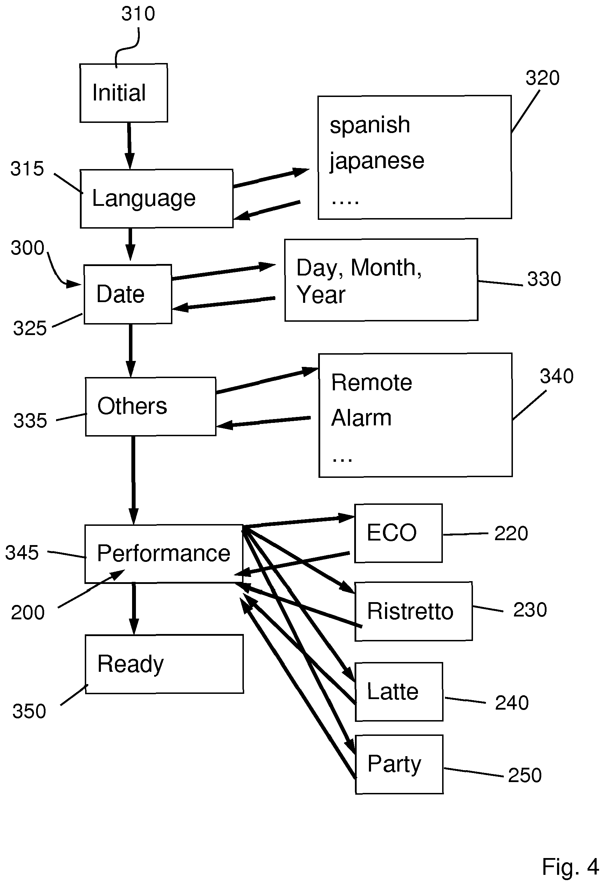

Figur 4 zeigt ein schematisches Ablaufdiagramm 300 zur Erstinbetriebnahme der Heißgetränkebereitungsvorrichtung 100. Nach einem Startschritt 310 erfolgt in einem Spracheingabeschritt 315 die Eingabe einer Sprache (beispielsweise Spanisch oder Japanisch) aus einem Auswahlmenü 200, wobei dann Anzeige Texte auf dem Display 110 in dieser Sprache erscheinen sollen. Nachfolgend wird in einem Datums-/Zeiteingabeschritt 325 ein Datum 330, beispielsweise in der Form eines Tages, eines Monats des Jahres und/oder eine aktuelle Uhrzeit von einem Benutzer der Heißgetränkebereitungsvorrichtung 100 eingegeben bzw. die entsprechenden Informationen eingelesen. In einem weiteren anschließenden Eingabeschritt 335 können weitere Parameter 340 wie beispielsweise die Einstellung eines Alarms oder die Möglichkeit einer Fernsteuerung der Heißgetränkebereitungsvorrichtung 100 eingestellt bzw. eingegeben werden. Hieran anschließend kann beispielsweise in einem Betriebsmoduseingabeschritt 345 auf dem Display 110 das Anzeigemenü 200 entsprechend der Abbildung aus Figur 2 dargestellt werden, in welcher den Benutzer der Heißgetränkebereitungsvorrichtung 100 die Möglichkeit der Auswahl der vorstehend genannten Betriebsmodi 220, 230, 240 oder 250 entsprechend der Beschreibung mit Bezug zu Figur 2 angeboten wird. Abschließend wird in einem Änderungsschritt 150 die Erstinbetriebnahme der Heißgetränkebereitungsvorrichtung 100 abgeschlossen und die entsprechend eingelesen Parameter abgespeichert. Für den Fall, dass beispielsweise zu einem späteren Zeitpunkt der Betriebsmodus der Heißgetränkebereitungsvorrichtung 100 geändert werden soll, kann noch ein entsprechendes Änderungssignal vom Benutzer eingelesen werden, sodass beispielsweise das im Betriebsmoduseingabeschritt 345 dargestellte Auswahlmenü 200 nochmals angezeigt wird und der vorstehend abgespeicherte bzw. hinterlegte ausgewählte Betriebsmodus als nicht mehr aktuell markiert oder gelöscht wird und die Heißgetränkebereitungsvorrichtung 100 mit dem erneut eingegebenen bzw. vom Benutzer ausgewählten Betriebsmodus 220, 230, 240 oder 250 betrieben wird.

Mit anderen Worten ausgedrückt zeigt Figur 3 verschiedene Einstellungs-Konfigurationsmöglichkeiten, die in der dargestellten Reihenfolge vom Benutzer abgefragt werden. Zunächst wird eine Sprache abgefragt, wobei abhängig von aufgespielter Variantendatei ein Defaultwert vorgegeben werden kann. Anschließend kann eine Länderausprägung eingegeben werden, wobei ebenfalls wiederum ein Defaultwert, abhängig von einer auf die Heißgetränkevorrichtung 100 aufgespielten Variantendatei, eingegeben werden kann. Hieran anschließend kann eine Datumseingabe (beispielsweise in der Form Tag, Monat und Jahr erfolgten, worauf noch eine Zeiteingabe in der Form einer Stunde und Minute erfolgen kann. Auch kann eine Tageszeitanzeige, beispielsweise in der Auswahl einer ein- oder ausgeschalteten Anzeige oder einer Nachtabschaltung eingegeben werden, wobei hier ebenfalls ein Defaultwert, beispielsweise in der Form einer ausgeschalteten Tageszeitanzeige vorgesehen werden kann. Auch kann ein Hinweis mit "OK" zum Energieverbrauch der vorstehend genannten Auswahl speziell quittiert werden müssen. Hiernach kann die Auswahl eines Betriebsmodus ("Performance") als Anwahl des speziellen, vom Kunden gewünschten Betriebsmodus erfolgen, wie es vorstehend beschrieben wurde. Denkbar ist hier ebenfalls die Verwendung einer Quittierung der Auswahl mittels eines "OK" zum Energieverbrauch. Abschließend kann ein Hinweis mit "OK" zum Abschluss der Erstinbetriebnahme erfolgen. Auf diese Weise kann der Kunde oder Benutzer der Heißgetränkebereitungsvorrichtung 100 die Möglichkeit, dasjenige Programm bzw. denjenigen Betriebsmodus zu nutzen oder auszuwählen, welches/welcher auf seine Bedürfnisse optimiert ist. Die Kundenzufriedenheit wird dadurch gesteigert.

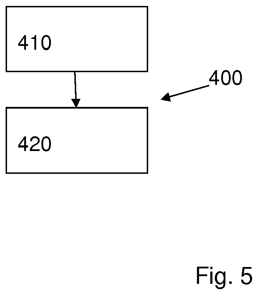

Figur 5 zeigt schematisch ein Ablaufdiagramm des Verfahrens 400 zur Ansteuerung einer Heißgetränkebereitungsvorrichtung. Das Verfahren 400 umfasst einen Schritt 410 des Ausgebens eines Anzeigemenüs zur Auswahl eines von mehreren Betriebsmodi für die Heißgetränkebereitungsvorrichtung. Die Betriebsmodi sind bereits vorstehend unter 1 (ECO) 2 (Ristretto/Espresso), 3 (Cappu/Latte Macciato) und 4 (Party) beschrieben. Schließlich umfasst das Verfahren 400 einen Schritt 420 des Einlesens eines von einem Benutzer der Heißgetränkebereitungsvorrichtung 100 ausgewählten Betriebsmodus und Ansteuern der Heißgetränkebereitungsvorrichtung 100 unter Verwendung des eingelesenen Betriebsmodus.

## Patentansprüche

1. Verfahren (400) zur Ansteuerung einer Heißgetränkebereitungsvorrichtung (100), wobei das Verfahren (400) die folgenden Schritte aufweist:
- Ausgeben (410) eines Anzeigemenüs (200) zur Auswahl eines von mehreren Betriebsmodi (220, 230, 240, 250) für die Heißgetränkebereitungsvorrichtung (100), wobei zumindest einer der auswählbaren Betriebsmodi (220, 230, 240, 250) einen Hochtemperaturbetriebsmodus (230) und ein weiterer der auswählbaren Betriebsmodi (220, 230, 240, 250) einen Niedertemperaturbetriebsmodus (220) repräsentiert, wobei bei dem Hochtemperaturbetriebsmodus (230) ein Betrieb der Heißgetränkebereitungsvorrichtung (100) mit einer hohen Temperatur einer Heizeinheit (150) zur Erhitzung einer Flüssigkeit zur Getränkebereitung in Zeitintervallen ohne Getränkebezug von der Heißgetränkebereitungsvorrichtung (100) vorgesehen ist und bei dem Niedertemperaturbetriebsmodus (220) ein Betrieb der Heißgetränkebereitungsvorrichtung (100) mit einer niedrigen Temperatur einer Heizeinheit (150) zur Erhitzung der Flüssigkeit in Zeitintervallen ohne Getränkebezug von der Heißgetränkebereitungsvorrichtung (100) vorgesehen ist; und
- Einlesen (420) eines von einem Benutzer der Heißgetränkebereitungsvorrichtung (100) ausgewählten Betriebsmodus (220, 230, 240, 250) und Ansteuern der Heißgetränkebereitungsvorrichtung (100) unter Verwendung des eingelesenen Betriebsmodus (220, 230, 240, 250).

2. Verfahren (400) gemäß Anspruch 1, **dadurch gekennzeichnet, dass** der Schritt des Ausgebens (410) und der Schritt (420) des Einlesens bei einer Erstinbetriebnahme der Heißgetränkebereitungsvorrichtung (100) ausgeführt werden, wobei der im Schritt (420) des Einlesens eingelesene Betriebsmodus (220, 230, 240, 250) für eine nachfolgende Inbetriebnahme der Heißgetränkebereitungsvorrichtung (100) abgespeichert wird, insbesondere wobei für eine nachfolgende Inbetriebnahme die Schritte des Ausgebens (410) und des Einlesens (420) unterdrückt werden.

3. Verfahren (400) gemäß einem der vorangegangenen Ansprüche, **dadurch gekennzeichnet, dass** im Schritt (410) des Ausgebens ferner zumindest einer der auswählbaren Betriebsmodi (220, 230, 240, 250) einen Betriebsmodus (240) unter Verwendung von Milch zur Zubereitung des Heißgetränks repräsentiert, insbesondere wobei im Schritt (420) des Einlesens ein Ansteuern einer Pumpe (125) zur Aufnahme von Milch in eine Milchbehandlungseinheit (125, 130) ausgeführt wird.

4. Verfahren (400) gemäß einem der vorangegangenen Ansprüche, **dadurch gekennzeichnet, dass** im Schritt (410) des Ausgebens ferner zumindest einer der auswählbaren Betriebsmodi (220, 230, 240, 250) einen Betriebsmodus (250) repräsentiert, in welchem eine Ausgabe von Anweisungen zur Wartung der Heißgetränkebereitungsvorrichtung (100) an einen Benutzer der Heißgetränkebereitungsvorrichtung (100) unterdrückt wird.

5. Verfahren (400) gemäß einem der vorangegangenen Ansprüche, **dadurch gekennzeichnet, dass** im Schritt (420) des Einlesens ein Ansteuern der Heizeinheit (130, 150) zur Vorheizung der Heizeinheit (130, 150) erfolgt, wenn der Hochtemperaturbetriebsmodus (230) ausgewählt wurde und vom Benutzer kein Heißgetränkebereitungssignal eingelesen wurde, welches einen aktuellen Wunsch der Zubereitung eines Heißgetränkes repräsentiert.

6. Verfahren (400) gemäß einem der vorangegangenen Ansprüche, **dadurch gekennzeichnet, dass** im Schritt (420) des Einlesens ein Rücksetzsignal eingelesen wird, welches einen vorangegangenen ausgewählten Betriebsmodus (220, 230, 240, 250) als nicht mehr aktuell klassiert oder löscht, wobei ferner eine wiederholte Ausführung der Schritte (410, 420) des Anzeigens und Einlesens angesteuert wird.

7. Verfahren (400) gemäß einem der vorangegangenen Ansprüche, **dadurch gekennzeichnet, dass** im Schritt (420) des Einlesens ein Ansteuern der Heißgetränkebereitungsvorrichtung (100) derart erfolgt, dass eine Pumpe (125, 145) angesteuert wird, um eine Pumpgeschwindigkeit für eine Flüssigkeit gegenüber einer Pumpgeschwindigkeit der Flüssigkeit bei einem anderen Betriebsmodus zu drosseln.

8. Verfahren (400) gemäß einem der vorangegangenen Ansprüche, **dadurch gekennzeichnet, dass** im Schritt (420) des Einlesens ein Ansteuern der Heißgetränkebereitungsvorrichtung (100) derart erfolgt, dass vor einer Zubereitung des Heißgetränks eine Einschaltspülung der Heißgetränkebereitungsvorrichtung (100) ausgeschaltet und/oder unterdrückt wird.

9. Vorrichtung (160), die ausgebildet oder programmiert ist, um die Schritte des Verfahrens (400) gemäß einem der vorangegangenen Ansprüche in entsprechenden Einheiten (165, 170) auszuführen, anzusteuern und/oder umzusetzen.

10. Computer-Programmprodukt mit Programmcode zur Durchführung des Verfahrens (400) nach einem der vorangegangenen Ansprüche, wenn das Computer-Programmprodukt in einer Vorrichtung (160) ausgeführt wird.

11. Heißgetränkebereitungsvorrichtung (100), umfassend ein Fluidsystem (2), in dem ein Wassertank (121) oder Wasseranschluss, eine Pumpe (145), eine Heizeinheit (150) eine Brüheinheit (155) und ein Ventilsystem (V1, V2, V3) zur selektiven Aktivierung der Strömungswege innerhalb des Fluidsystems (2) angeordnet ist, welches in einen Auslassstutzen (135) mit zumindest einer Düse (21, 22, 23) mündet, um das zubereitete Getränk, heißes Wasser oder Dampf auszugeben, ferner umfassend eine Vorrichtung (160) gemäß Anspruch 9 welche mit einem Computer-Programmprodukt (MEM) gemäß Anspruch 10 bestückt ist, um zumindest die Pumpe (145), die Heizeinheit (150) und eine Eingabe- (170) und Ausgabeeinheit (110) zur Durchführung eines Verfahrens gemäß einem der Ansprüche 1 bis 8 anzusteuern.
